# EUROPEAN PATENT APPLICATION

(11) **EP 1 086 619 A1**
(43) Date of publication of application: **28.03.2001**
(21) Application number: 99204174.9
(22) Date of filing: 10.12.1999
(51) Int. Cl.: A01F 15/07

(54) **A bale wrapping machine**

(30) Priority: 23.09.1999 IE 990794
(71) Applicant: Arboc Limited, Dublin 2 (IE)
(72) Inventor: Agars, Thomas, Bagenalstown, Co. Carlow (IE); Belton, Christopher, Leighlinbridge, Co. Carlow (IE)
(74) Representative: Shortt, Peter Bernard

(57) **Abstract**

The invention relates to bale wrapping machine (1) including a chassis (10) having two wheels (12) on which the machine travels, and a hitch connector (25) positioned at one side of the front of the chassis (10) by means of which the chassis (10) may be connected to a tow arm (2). The invention provides support means, preferably in the form of a wheel (30), which is located at the opposite side of the front of the chassis (10). The support wheel (30) is pivotable from an inactive position to an active position in which the support wheel (30) comes into contact with the ground to support the front portion of the chassis (10). The machine includes a lift arm (6) at the front of the machine for lifting a bale (5) to be wrapped onto a wrapping table (11) of the machine (1), and control means are provided to move the support wheel (30) into the active support position when a bale (5) is lifted by the lift arm (6).

## Description

### Technical Field

The invention relates to a bale wrapping machine. The invention is particularly concerned with a machine for wrapping bales of silage, hay, straw and the like (hereinafter referred to as "fodder") with a plastics film, and more particularly relates to an in-line-type, or off-line type, bale wrapping machine incorporating a bale lifting arm.

### Background Art

It has become conventional practice in agriculture to form fodder into cylindrical-shaped bales which are then wrapped in a plastics film. This is a particularly suitable method of manufacturing silage because the silage is kept air-tight within the wrapped bale which, typically, is wrapped with up to six plies of plastics. The cylindrically shaped bales are commonly called "big round bales". Machines for wrapping big round bales with a plastics film are described, for example, in British Patent Specifications Nos. 2191984A, 2228246A and EP 0208034A (GB 2159489B).

Bale wrapping machines of the kind described comprise a wheeled chassis which may be towed by a tractor. The chassis carries a tipping platform which, in turn, supports a turntable. The turntable is rotatable about a vertical axis. The turntable carries a pair of spaced rollers each of which rotates about a horizontal axis. An endless belt is stretched between the rollers and rotates with the rollers. In order to wrap a large round bale of fodder material with plastics film, the round bale is lifted onto the turntable by means of lifting arms. The bale rests on the endless belt. The free end of a roll of plastics film is attached to the bale and the turntable is then rotated about a generally vertical axis to cause the sheet of film to be wrapped around the bale. However, if no movement of the bale about its longitudinal axis were to occur the bale would merely be wrapped with a single band having the thickness of the width of the plastics film. However, on each rotation of the turntable the endless belt is caused to move for a predetermined distance which, in turn, causes the bale to roll about its surface, i.e. about a horizontal axis. This rolling of the bale on the belt allows a new area of bale to be wrapped by the film on each rotation of the turntable, thus eventually achieving a complete covering of the bale with a substantial degree of overlap of the plastics film.

In the bale-wrapping machines described above the bale to be wrapped is mounted on a turntable which rotates about a vertical axis, and the dispenser for the roll of plastics film is fixed. It is the rotation of the bale about the vertical axis which causes the film to be unrolled from the dispenser. However, it is also known from the prior art, for example in EP-B-0110110, DE 3642513A, and GB 2193683A, for the bale to be mounted on rollers which rotate the bale only about the horizontal axis. In this arrangement there is provided a rotary support arm for the film dispenser which rotates the film dispenser, about a vertical axis, around the bale, while the bale is being turned about a horizontal axis.

So called in-line type bale wrappers are known, particularly for use in baling and wrapping silage. In this arrangement a tractor tows a baling machine which picks up the cut grass, compacts it into a round bale, ties it with twine, and discharges it from the baling machine. A bale wrapping machine is towed behind the baling machine by means of a hitch arm. The bale wrapping machine, which is typically of a construction as described above, has a bale lifting device at the front of the machine. The lifting device receives the round bale as it is discharged from the baling machine and transfers the bale to a wrapping turntable of the bale wrapping machine where it is wrapped in plastics film in well known manner. In this arrangement the tractor, baling machine and bale wrapping machines all travel in line.

In a variation of the above arrangement the bale wrapping machine can be used in an "off-line" mode. That is the baling machine operates independently of the bale wrapping machine, to deposit bales on the ground. The bale wrapping machine, with integral bale pick up device, is towed by a tractor by means of an angularly disposed hitch arm, such that the bale wrapper travels in a path alongside and parallel to that of the tractor. In this way the bale wrapper can pick up the bales from the ground and the travel of the tractor is not obstructed by the bales on the ground.

When operating behind the tractor, particularly in off-line mode, there is a tendency for the wrapping machine to topple over when lifting heavy bales. This is particularly so because the tow hitch is attached to one side of the machine. Attempts have been made to overcome this problem by providing ballast at the rear of the machine, but this has not been successful when lifting bales in excess of 700kg. It is also known to mount the bale wrapping machine on a four-wheel chassis, but this has the disadvantage that it makes the machine less manoeuvrable, and more prone to skidding, than a two-wheeled chassis.

A further problem associated with off-line bale wrapping machines is that they are difficult to manoeuvre.

### Object of the Invention

It is an object of the invention to provide a bale wrapping machine, suitable for use in in-line or off-line mode, which is more stable than conventional machines. It is also an object of the invention to provide a bale wrapping machine, for off-line use, which has improved manoeuvrability.

### Summary of the Invention

The invention relates to a bale wrapping machine including a chassis having two wheels on which the machine travels, a hitch connector positioned at one side of the front of the chassis by means of which the chassis may be connected to a tow arm, and support means located at the opposite side of the front of the chassis, the support means being moveable from an inactive position to an active position in which the support means comes into contact with the ground to support the front portion of the chassis.

Preferably, the support means is a wheel and is pivotable from an inactive to the active position, suitably by means of a hydraulic ram.

The bale wrapping machine may include a lift arm at the front of the machine for lifting a bale to be wrapped onto a wrapping table of the machine, and control means are provided to move the support wheel into the active support position when a bale is lifted by the lift arm. In this way the support wheel acts to support part of the weight of the bale at the front of the machine, in cooperation with the tow arm at the opposite side of the machine, thus preventing the machine from toppling forward under the weight of the bale.

Preferably, movement of the support wheel is effected by a hydraulic ram which is controlled by hydraulic control means, and which is connected in series to a second hydraulic ram used to operate the lift arm, such that when hydraulic pressure is applied, the rams are operated to simultaneously lift the lift arm and to lower the support wheel. The hydraulic control means includes a valve e.g. an overcentre valve to ensure that the support wheel is locked into the downward position during lifting of the lift arm. A second control valve ensures that when the support wheel is in the upward position it cannot fall down under its own weight.

In accordance with another aspect, moving means, preferably a hydraulic ram, is connected between the tow arm and the chassis and is operable, in response to remotely located control means, to adjust the angle between the tow arm and the chassis, to assist in steering the bale wrapping machine. The remotely located control means may be a joystick, located in the cab of a tractor used to tow the machine. The hydraulic ram is connected to a hydraulic circuit which includes a overcentre valve to lock the ram in a desired position.

### Brief Description of the Drawings

Embodiments of the invention are hereinafter described with reference to the accompanying drawings, wherein:
Figure 1 is a plan view of a bale wrapping machine in in-line mode and in off-line mode;
Figure 2 to 6 are side elevations of one embodiment of a bale-wrapping machine of the invention, each showing the machine at different stages in its operation;
Figure 7 is a plan view of the machine of Figure 6;
Figure 8 is a plan view of a lift arm for use with the machine of Figure 7; and
Figures 9 and 10 are hydraulic circuit diagrams.

### Detailed Description

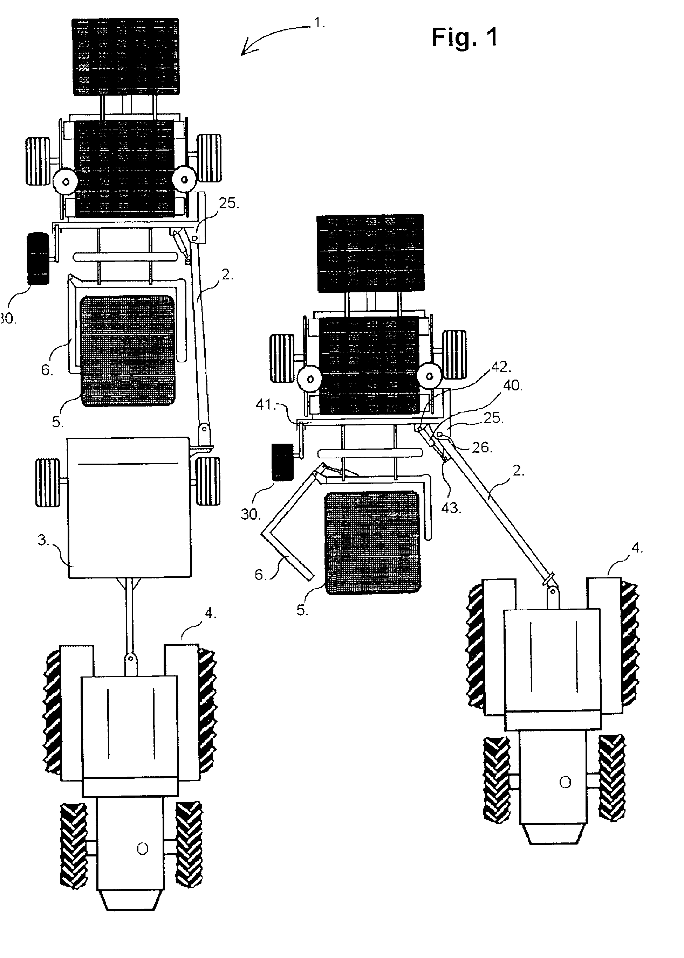

Referring to Figure 1 of the drawings, the left part of the drawings shows a bale wrapping machine 1 in in-line mode, that is it is connected by a hitch arm 2 to a rear of a baler machine 3. The baler 3 is in turn towed by a tractor 4. The baler 3 picks up wilted silage from the field, compacts it into a tied round bale 5, which is placed in a lifting arm 6 fixed to the front of the bale wrapping machine 1, and is transferred to the wrapping machine 1 where it is wrapped in plastics film.

The right part of Figure 1 shows the bale wrapping machine 1 in off-line mode, that is it is directly connected to the tractor 4 by the hitch arm 2, which is angularly disposed, such that the bale wrapper 1 travels in a path alongside and parallel to that of the tractor 4. In this way the bale wrapper 1 can pick up the bales 5 from the ground and the travel of the tractor 4 is not obstructed by the bales 5 on the ground.

Referring now to Figures 1 to 7, these show the bale wrapping machine 1 of the invention, which is suitable for use in wrapping square, rectangular and round bales.

The bale wrapping machine comprises a chassis 10 having a pair of chassis wheels 12. A turntable 11 is mounted on the chassis 10. The turntable 11 is pivotally connected to the chassis 10 by a main pivot at the rear of the chassis 10 such that the turntable may be tipped to unload a wrapped bale, at the end of the wrapping process.

The turntable 11 has mounted thereon a pair of spaced rollers 13, 14. The rollers are mounted for rotation about horizontal axes on pairs of brackets 15, 16. An endless belt 17 is mounted rotationally about the rollers 13, 14. The rollers 13, 14 and belt 17 define a well or cradle which is adapted to receive a large bale 5 of silage or other fodder for wrapping. The bale is lifted into the cradle by means of a hydraulically-operated lifting arm 6 which extends forwardly of the machine, and which is described below. When in the cradle, the bale is carried on and is rotated by the conveyor belt 17. The turntable 11 rotates, in well known manner about a vertical axis. The bale 4 is prevented from falling sideways off the turntable by restraining rollers 18.

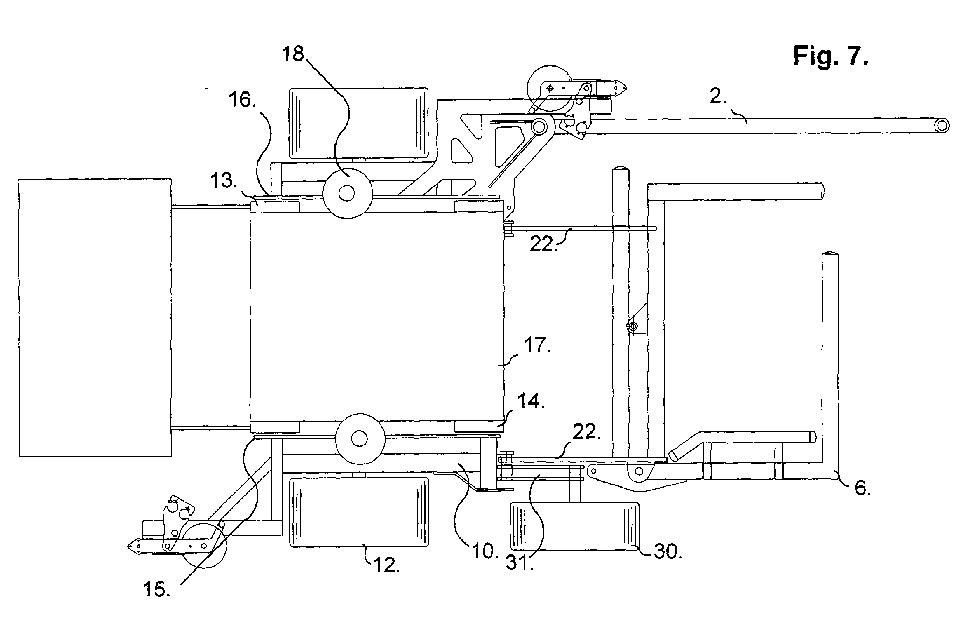

As shown in figure 7 a film dispensing system 20 is mounted on to the side of the chassis 10.

The film dispenser 20 is of well known construction and may include a pretensioning unit through which the plastics film is fed and stretched. The film dispenser may include a cut and start device (not shown) for severing the film at the end of wrapping. A suitable cut and start device is disclosed in IE S970060.

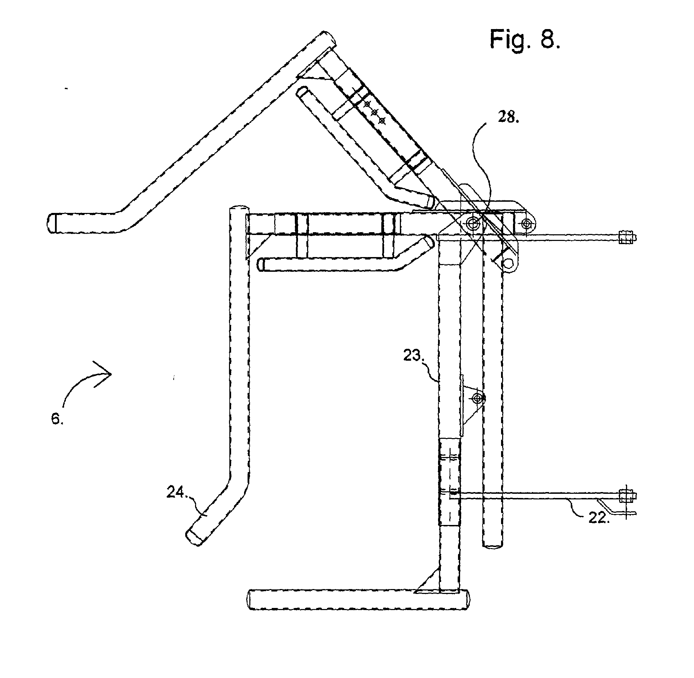

A lift arm 6 having a grab 21 is located at the front of the bale wrapping machine. The lift arm is shown in more detail in Figure 8 and comprises a main frame 22 which is mounted on the front of the chassis 10 of the bale wrapping machine. The lifting device has a fixed arm 23 which is of L-shape. An L-shaped grab arm 24 is pivoted to the main frame at its inner end. As shown in Figure 8, the grab arm 24 is pivotable from a closed position, in which it defines with the arm 23 a space of substantially rectangular shape, about a vertical axis on pivot 28 to an open position, as shown in broken line in Figure 8. The arms 23 and 24 are together pivotable upwardly about a main horizontal pivot.

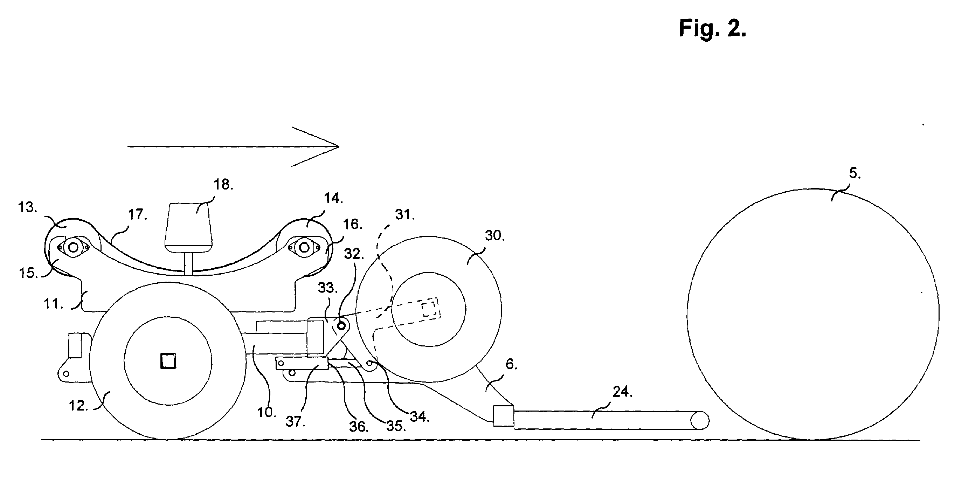

Referring now to Figure 2 this shows the wrapping machine 1 approaching a bale 5 which has previously been deposited on the ground by a baler 3. In this position, the lift arm grab 24 is in the open position to receive the bale 5.

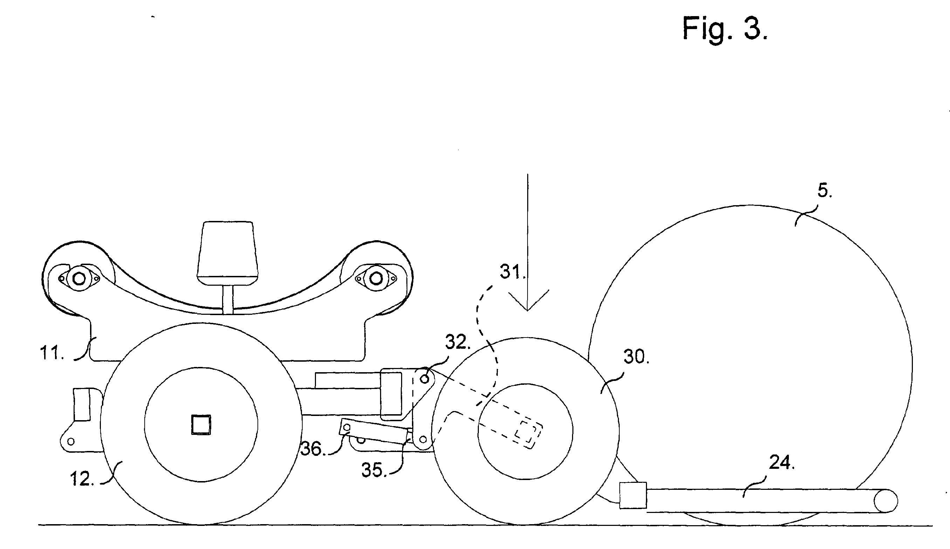

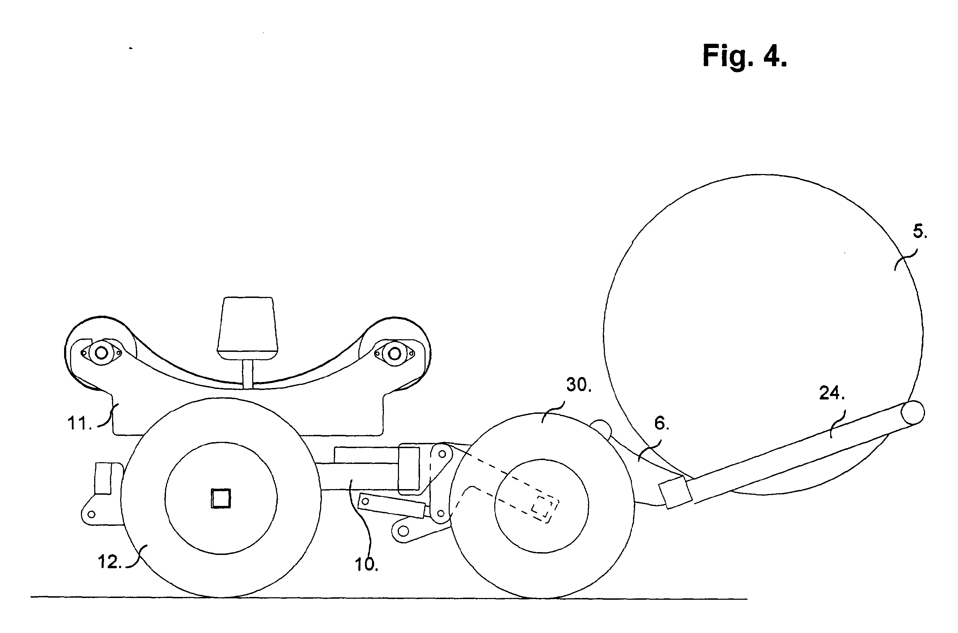

Figure 3 shows the lifting arm engaging with the bale 5, at which point the grab arm 24 closes to the position shown in Figure 8 to tightly grip the bale 5. Figure 4 shows the grab arms 23, 24 lifting the bale upwardly.

It will be appreciated that at this point the whole weight of the bale 5 is carried by the front of the chassis 10 of the bale wrapping machine and there is extra downward force on the chassis due to the leverage exerted by the lift arm grab. Thus, a conventional machine having two chassis wheels 10 for the wrapping machine would tend to topple forwardly under the weight of a heavy bale. This is particularly so because as shown in Figure 1 the tow hitch 2 is attached at one lateral side of the front of the machine 1. Thus, the tow hitch tends to support the machine at that side but not on the opposite side.

This problem is overcome by the invention which provides a support wheel 30 to support the weight of the bale as it is being lifted from the ground by the lifting mechanism.

As will be seen in Figure 1, the support wheel 30 is mounted adjacent the front of the chassis 10 at a side opposite a tow hitch bracket 25 to which the hitch arm 2 is pivotally connected.

The operation of the support wheel 30 is now described with reference to Figures 2 to 6.

The support wheel 30, preferably is in the form of a road wheel having an inflated tyre. It is mounted for rotation on a swinging axle 31, which is substantially L-shaped. The corner of the axle 31 is pivotally connected to a pivot 32 on a bracket 33 welded to the chassis 1. The toe 34 of the axle 31 is pivotally connected to the free end of the piston 35 of a hydraulic ram 36. The cylinder 37 of the hydraulic ram 36 is also pivotally mounted to the chassis 1 in a position such that the ram may exert a turning force on the toe 34 about pivot 32.

Figure 2 shows the bale wrapping machine 1 approaching a bale 5, with the support wheel 30 in the upward position, and the lift arm 6 down, with the grab 24 in the open position. This describes the off-line mode. When the machine is in in-line mode the bale 5 is deposited directly from the baler 3 into the lift arm 6.

Referring now to Figure 3 this shows the support wheel 30 having moved to the downward position in which it is in contact with the ground. This is achieved by retracting the piston 35 of the hydraulic ram 36. The grab arm 24 closes at this position to grip the bale 5.

Figure 4 shows the lift arm 6 lifting the bale upwards while the support wheel is in the downward position to assist in carrying the weight of the bale 5 and preventing the wrapping machine from toppling forward at the corner opposite to the hitch arm 2.

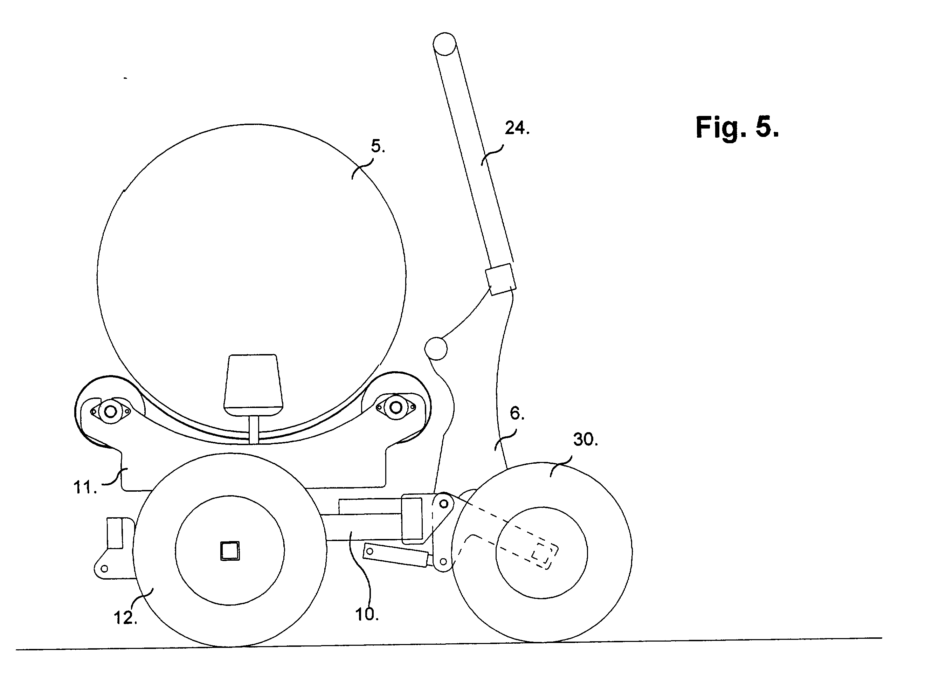

Figure 5 shows the lift arm in the fully upward position with the bale having been deposited on the turntable 11. The support wheel 30 remains in the downward position.

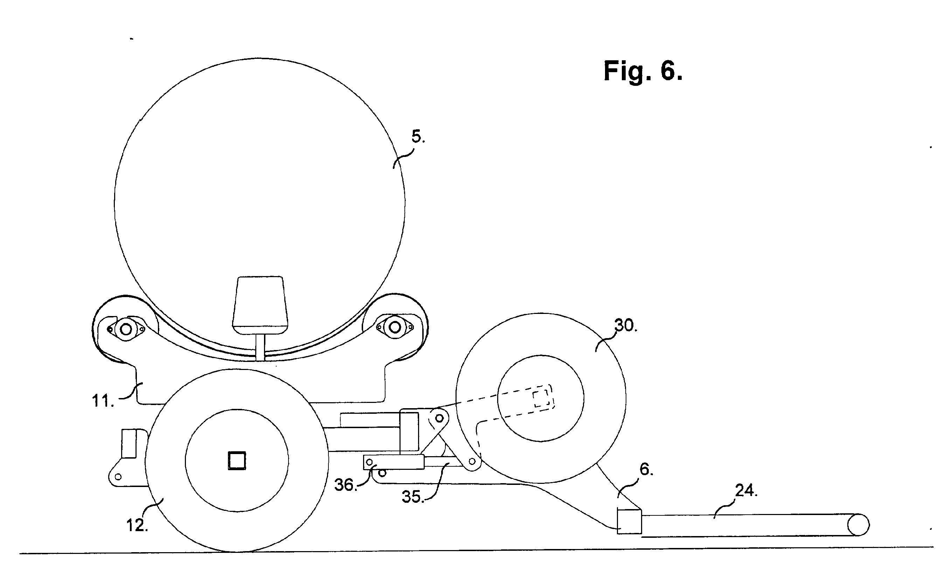

Figure 6 shows the piston 35 of the ram 36 in an extended position to lift the support wheel to the upper position in which it is no longer in contact with the ground. The lift arm 6 is now in the downward position, and the cycle recommences.

It will be appreciated that the support wheel 30 only comes into operation as and when it is needed. The support wheel drops down automatically when the lift arm commences to lift, and the support wheel 30 retracts when the lift arm 6 is descending after the bale 5 is transferred to the turntable 11. The support wheel considerably reduces the load on the hitch arm 2 and on the machine 1 to which it is attached, when the bale 5 is being lifted. The support wheel 30 also prevents the machine 1 from toppling over when the bale 5 is being lifted in the off-line mode behind the tractor. The operator is free to travel towards the next bale 5 as the lift arm 6 is being raised. The support wheel 30 is lowered for a duration of about 5 seconds and this avoids problems of skidding while turning the machine.

It will be appreciated that in accordance with a modification of the invention, the support wheel 30 may be substituted by other support means, for example a skid (now shown). The skid is raised and lowered in exactly the same way as the wheel and slides along the ground for the short interval in which it is in contact with the ground. However, it has been found that a rotatable support wheel is less likely to cause skidding.

In accordance with another aspect, the invention provides means for improving the manoeuvrability of the bale wrapping machine 1, particularly when it is in the off-line mode. It will be appreciated that because the hitch arm 2 is attached to the one side of the bale wrapping machine it is more difficult to steer the bale wrapping machine than would be the case if the hitch arm 2 were connected to a central location at the front of the machine. It will be appreciated that the reason for attaching the hitch arm 2 to the side of the machine is to enable the machine to travel in a path alongside that of the tractor 4.

It is known in machines of this kind for the angle between the hitch arm 2 and the hitch bracket 25 of the machine 1 to be adjustable to one of several angular positions where it is locked by mechanical locking means. A hydraulic ram may be used to push the hitch arm into one of the locking positions but the operator has to leave the cab of the tractor to operate such an arrangement.

In accordance with the invention, a hydraulic ram 40 is connected between the end of the hitch arm 2 adjacent the tow bracket 25. The hydraulic ram is controlled remotely in the cab of the tractor by means of a joystick to move the hitch arm 2 in an angle about the pivot 26 within a turning arc of about 50 to 60° in total movement.

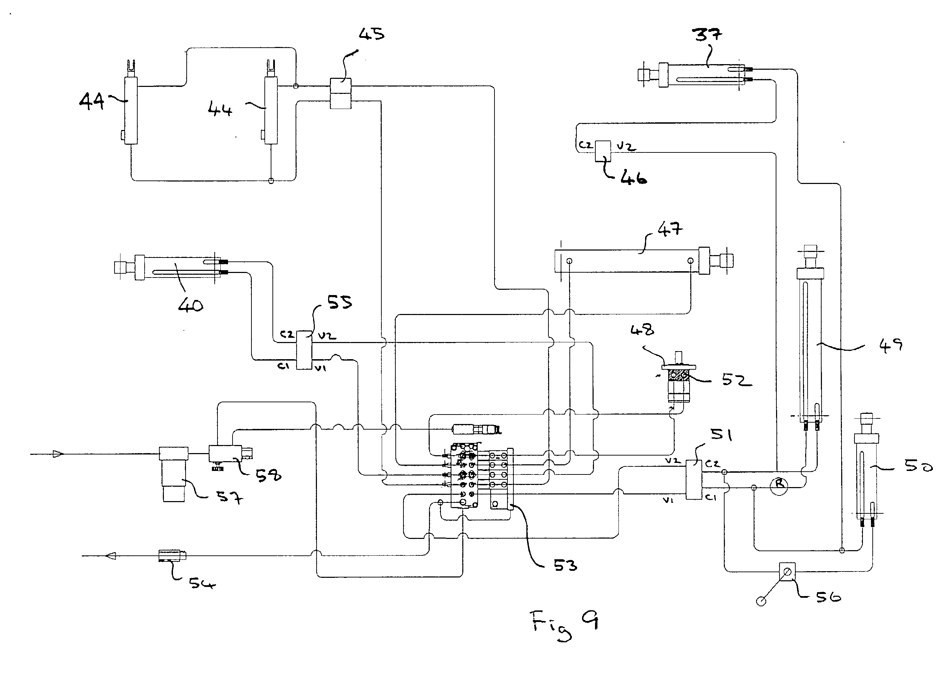

Reference is now made to Figure 9 of the drawings which shows one embodiment of the hydraulic circuit diagram for controlling the operation of the support wheel 30 in conjunction with the lift arm 6, and also for controlling the movement of the hitch arm 2. The support wheel 30 is controlled by the hydraulic cylinder 37. This cylinder is connected in series with lift arm cylinder 49 and lift arm grab cylinder 50. When the hydraulic pressure is applied, it closes lift arm grab cylinder 50 and simultaneously retracts support wheel hydraulic cylinder 37 to lower the support wheel 30. An overcentre valve 46 ensures that the wheel 30 is locked down during the lifting of the lift arm.

When the lift 6 arm is lowered the support wheel hydraulic cylinder 37 extends and raises up the support wheel 30. An overcentre valve 51 ensures that the support wheel 30 does not fall down under its own weight.

The hydraulic ram 40 for adjusting the hitch arm 2 is fed hydraulic fluid through an overcentre valve 55. The valve 55 ensures that the arm 2 may be locked in any desired position relative to the chassis 10.

The circuit also includes rams 44 for operating a cut and start mechanism for controlling the feed of wrapping film in well known manner; and a rotary coupling 45. It includes a ram 47 for tipping the turntable 11. The circuit also includes a hydraulic motor 48, including a cross line relief valve 52, for rotating the turntable. The hydraulic lines pass through a five bank solenoid valve 53 for controlling each of the hydraulic functions.

The circuit also includes a non-return valve 54, an oil filter 57, a flow divider 58 and a tap 56.

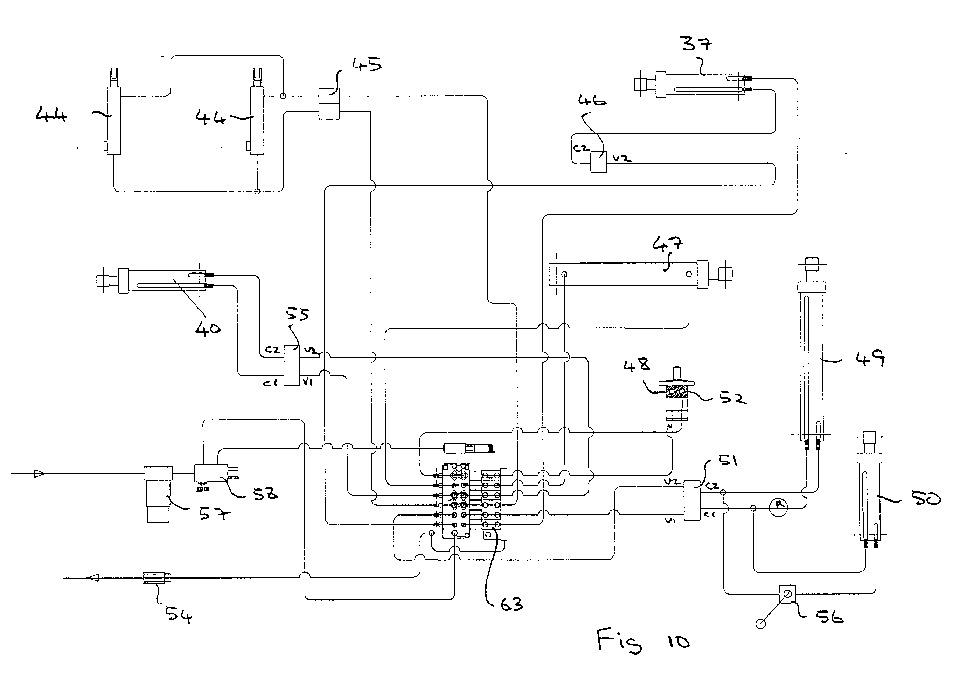

An alternative hydraulic circuit is shown in Figure 10. In this circuit the hydraulic cylinder 37 for the support wheel 30 is controlled by a separate valve in a six bank solenoid valve set 63. When the lift arm 6 is operated the support wheel hydraulic cylinder 37 retracts and lowers the support wheel 30, before the lift arm cylinder 49 extends, to raise the arm 6. When the lift arm 6 is lowered the support wheel cylinder 37 will not extend to raise support wheel 30 until the lift arm 6 reaches its lower position to receive the bale 5.

Otherwise the circuit of Figure 10 is similar to that of Figure 9, and like reference numerals denote like parts.

It will be appreciated that as an alternative to the use of over centre valves other check valves can be used, for example a proportional valve to divert a portion of the hydraulic fluid to another cylinder.

## Claims

1. A bale wrapping machine (1) including a chassis (10) having two wheels (12) on which the machine travels, a hitch connector (25) positioned at one side of the front of the chassis (10) by means of which the chassis (10) may be connected to a tow arm (2), characterised in that support means (30) are located at the opposite side of the front of the chassis (10), the support means (30) being moveable from an inactive position to an active position in which the support means (30) comes into contact with the ground to support the front portion of the chassis (10).

2. A bale wrapping machine as claimed in Claim 1 characterised in that the support means is a wheel (30) and is pivotable from an inactive to the active position.

3. A bale wrapping machine as claimed in Claim 1 or 2 characterised in that it includes a lift arm (6) at the front of the machine for lifting a bale (5) to be wrapped onto a wrapping table (11) of the machine (1), and control means are provided to move the support wheel (30) into the active support position when a bale (5) is lifted by the lift arm (6).

4. A bale wrapping machine as claimed in any of the preceding claims characterised in that movement of the support wheel (30) is effected by a hydraulic ram (36) which is controlled by hydraulic control means, and which is connected in series to a second hydraulic ram (49) used to operate the lift arm (6), such that when hydraulic pressure is applied, the rams (36, 49) are operated to simultaneously lift the lift arm (6) and to lower the support wheel (30).

5. A bale wrapping machine as claimed in any of the preceding claims characterised in that the hydraulic control means includes a valve (46) to ensure that the support wheel (30) is locked into the downward position during lifting of the lift arm (6).

6. A bale wrapping machine as claimed in any of the preceding claims characterised in that it includes a second control valve (51) which ensures that when the support wheel (30) is in the upward position it is prevented from falling down under its own weight.
